Europäisches Patentamt

European Patent Office

Office européen des brevets

(11) Veröffentlichungsnummer: **0 532 894 B1**

# EUROPÄISCHE PATENTSCHRIFT

(45) Veröffentlichungstag der Patentschrift: **05.10.94**

(21) Anmeldenummer: **92113529.9**

(22) Anmeldetag: **08.08.92**

(51) Int. Cl.5: **B01J 41/14**, B01J 41/04, C08F 8/32

(54) Schwach basische Anionenaustauscher, Verfahren zu ihrer Herstellung durch Aminolyse und ihre Verwendung zur Entfernung von Sulfationen aus wässrigen Flüssigkeiten.

(30) Priorität: **22.08.91 DE 4127861**

(43) Veröffentlichungstag der Anmeldung:
**24.03.93 Patentblatt 93/12**

(45) Bekanntmachung des Hinweises auf die
Patenterteilung:
**05.10.94 Patentblatt 94/40**

(84) Benannte Vertragsstaaten:
**AT DE FR GB IT**

(56) Entgegenhaltungen:
DE-A- 3 233 524
DE-A- 3 603 602
GB-A- 972 897
US-A- 2 582 194
US-A- 3 842 002

(73) Patentinhaber: **BAYER AG**

**D-51368 Leverkusen (DE)**

(72) Erfinder: **Heller, Harold, Dr.**
**Hufelandstrasse 59**
**W-5000 Köln 80 (DE)**
Erfinder: **Minz, Franz-Rudolf, Dr.**
**Hans-Sachs-Strasse 14**
**W-4047 Dormagen 11 (DE)**
Erfinder: **Klipper, Reinhold M., Dr.**
**Geilenkircher Strasse 29**
**W-5000 Köln 41 (DE)**
Erfinder: **Mitschker, Alfred, Dr.**
**Am Gartenfeld 50**
**W-5068 Odenthal-Holz (DE)**
Erfinder: **Hoffmann, Heiko**
**Heitberg 6**
**W-5060 Bergisch Gladbach 1 (DE)**

EP 0 532 894 B1

EP 0 532 894 B1

**Beschreibung**

Die Erfindung betrifft schwach basische Anionenaustauscher vom Poly(meth)acrylamid-Typ mit einem hohen selektiven Aufnahmevermögen für Sulfationen, ein Verfahren zur Herstellung dieser Ionenaustauscher durch Aminolyse von Poly(meth)acrylnitril bzw. Poly(meth)acrylat mit definierten Polyaminen und die Verwendung dieser Ionenaustauscher zur Entfernung von Sulfationen aus wäßrigen Flüssigkeiten, insbesondere aus Alkalisalzlösungen (Kochsalzsolen) und aus Abwässern.

Schwach basische Anionenaustauscher vom Poly(meth)acrylamid-Typ können bekanntlich aus vernetztem Poly(meth)acrylnitril oder aus vernetztem Poly(meth)acrylat durch Aminolyse (= Umsetzung mit Polyaminen) hergestellt werden (US-A 2 582 194), wobei aus Nitril- bzw. Estergruppen Amidgruppen (und teilweise - unerwünscht - Carboxylgruppen) entstehen Nitril- oder Estergruppen enthalten die aminolysierten Produkte praktisch nicht mehr.

Zur Aminolyse setzt man im allgemeinen Polyamine ein, die mindestens eine primäre Aminogruppe pro Molekül enthalten. Die bei der Aminolyse entstehenden Amidgruppen sind zum Ionenaustausch nicht befähigt, aber die verbleibenden primären, sekundären und tertiären Aminogruppen stehen dafür zur Verfügung.

Die Verwendung solcher schwach basischen Anionenaustauscher vom Poly(meth)acrylamid-Typ zur Entfernung von Sulfationen aus wäßrigen Lösungen (Meerwasser, Salzwasser, Rohwasser) ist beispielsweise aus der DE-OS 36 03 602 bekannt; dort werden z.B. das Produkt A 374 (fälschlicherweise: "der Firma Duolite"; richtig: "Produkt Duolite A 374" der Firma Diaprosim, heute Rohm and Haas) und das Produkt IRA 60 (korrekt: "Amberlite IRA 60") der Firma Rohm and Haas empfohlen (Sp. 2, Z. 10-13). Diese Produkte sind für den angegebenen Zweck zwar prinzipiell geeignet, besitzen aber in Gegenwart von Chloridionen ein Sulfationen-Aufnahmevermögen, dessen Steigerung durchaus noch wünschenswert wäre.

Überraschenderweise wurde gefunden, daß sich Anionenaustauscher mit gesteigertem Sulfationen-Aufnahmevermögen aus Chloridionen enthaltenden Lösungen durch Aminolyse von vernetztem Poly(meth)-acrylnitril und/oder vernetztem Poly(meth)acrylat mit Polyaminen herstellen lassen, wenn man zur Aminolyse ausgewählte Polyamine einsetzt.

Gegenstand der Erfindung ist also ein Verfahren zur Herstellung schwach basischer Anionenaustauscher vom Poly(meth)acrylamid-Typ mit Polyaminogruppen durch Aminolyse von Poly(meth)acrylnitril und/oder Poly(meth)acrylat mit Polyamin, wobei das Polyamin

pro Molekül 4 bis 8, vorzugsweise 4 oder 5, N-Atome besitzt,
pro Molekül mindestens 1 primäre Aminogruppe trägt und dadurch gekennzeichnet, daß das Polyamin einen Anteil heterocyclischer Isomerer unter einem Wert von

$$x = 100 - (A.B^{n-4}) \ [\%]$$

enthält, wobei
A 70 bis 99, vorzugsweise 75 bis 97, und insbesondere 80 bis 95
B 0,7 bis 0,9 und
n die Zahl der N-Atome pro Molekül
bedeuten.

Unter dem Begriff "Poly(meth)acrylnitril und/oder Poly(meth)acrylat" werden Poly(meth)acrylnitrile, Poly(meth)acrylsäureester, ihre Mischungen und ihre Copolymerisate mit einem Mischungsverhältnis oder einem Copolymerisationsverhältnis von (0 bis 100) : (100 bis 0), bezogen auf Gewichtsteile, verstanden.

Für die Herstellung von Poly(meth)acrylnitril und Poly(meth)acrylat bevorzugte ethylenisch ungesättigte copolymerisierbare Monomere umfassen Acrylnitril, Methacrylnitril und Ester der Formel $CH_2 = CHR^1$-$COOR^2$, worin $R^1$ Wasserstoff oder Methyl und $R^2$ einen $C_1$-$C_8$-Kohlenwasserstoffrest, vorzugsweise einen aliphatischen, cycloaliphatischen, araliphatischen oder aromatischen Rest mit bis zu 8 C-Atomen bedeuten. Beispiele solcher Ester umfassen die Methyl-, Ethyl-, Isopropyl-, n-, iso- und tert.-Butyl-, n-, sek- und tert.-Amyl-, n-Octyl-, 2-Ethylhexyl-, Cyclohexyl-, Benzyl- und Phenylester von Acrylsäure und Methacrylsäure; Acrylsäure- und Methacrylsäuremethyl- und - ethylester sind besonders bevorzugt.

Sowohl die Poly(meth)acrylnitrile als auch die Poly(meth)acrylate können copolymerisierte Einheiten nicht vernetzender "anderer" ethylenisch ungesättigter Monomerer, wie z.B. Styrol, Ethylstyrol, Vinyltoluol, Vinylacetat, Butadien, Chloropren, enthalten, wobei die Menge dieser copolymerisierten Einheiten 10 Gew.-%, bezogen auf die Gesamtmenge sämtlicher polymerisierter Einheiten nicht vernetzender Monomerer, gewöhnlich nicht übersteigt.

Die Poly(meth)acrylnitrile und Poly(meth)acrylate werden vernetzt - vorzugsweise durch Copolymerisation mit vernetzenden Monomeren mit mehr als einer copolymerisierbaren C=C-Doppelbindung pro

2

Molekül. Solche vernetzenden Monomeren umfassen beispielsweise polyfunktionelle Vinylaromaten wie Di- und Trivinylbenzole, Divinylethylbenzol, Divinyltoluol, Divinylnaphthalin, polyfunktionelle Allylaromaten wie Di- und Triallylbenzole, polyfunktionelle Vinyl- und Allylheterocyclen wie Trivinyl- und Triallylcyanurat und -isocyanurat, N,N'-C$_1$-C$_6$-Alkylendiacrylamide und -dimethacrylamide wie N,N'-Methylendiacrylamid und -dimethacrylamid, N,N'-Ethylendiacrylamid und -dimethacrylamid, Polyvinyl- und Polyallylether gesättigter C$_2$-C$_{20}$-Polyole mit 2 bis 4 OH-Gruppen pro Molekül, wie z.B. Ethylenglykoldivinyl- und -diallylether und Diethylenglykoldivinyl- und -diallylether, Ester ungesättigter C$_3$-C$_{12}$-Monocarbonsäuren und ungesättigter einwertiger C$_3$-C$_{12}$-Alkohole oder gesättigter C$_2$-C$_{20}$-Polyole mit 2 bis 4 OH-Gruppen pro Molekül wie Allylmethacrylat, Ethylenglykoldi(meth)acrylat, Glycerintri(meth)acrylat, Pentaerythrittetra(meth)acrylat, Divinylethylenharnstoff, Divinylpropylenharnstoff, Divinyladipat, aliphatische und cycloaliphatische Olefine mit 2 oder 3 isolierten C=C-Doppelbindungen wie Hexadien-1,5, Dimethylhexadien-1,5, Octadien-1,7, Trivinylcyclohexan. Als vernetzende Monomere haben sich Divinylbenzol sowie Mischungen aus Divinylbenzol und aliphatischen C$_6$-C$_{12}$-Kohlenwasserstoffen mit 2 oder 3 C=C-Doppelbindungen besonders bewährt. Die vernetzenden Monomeren werden im allgemeinen in Mengen von 2 bis 20 Gew.-%, vorzugsweise 2 bis 12 Gew.-%, bezogen auf die Gesamtmenge der eingesetzten Monomeren, eingesetzt.

Die Polymerisation wird gewöhnlich nach dem Suspensionspolymerisationsverfahren in Gegenwart eines radikalischen Initiators wie Benzoylperoxid oder einer Azoverbindung, beispielsweise Azo-bis-isobutyronitril, im Temperaturbereich von 20 bis 120°C und unter Verwendung üblicher Suspensionsstabilisatoren ausgeführt.

Es können mikro- und makroporöse Perlpolymerisate eingesetzt werden. Die makroporösen Perlpolymerisate können hergestellt werden, indem der Monomermischung porogene Agenzien wie sie beispielsweise bei Seidl et al., Adv. Polym. Sci., Vol. 5 (1967), S. 113-213, beschrieben sind, zugesetzt werden, z.B. aliphatische Kohlenwasserstoffe, Alkohole, Ester, Ether, Ketone, Trialkylamine, Nitroverbindungen, vorzugsweise Isododecan, Methylisobutylketon, Methylisobutylcarbinol in Mengen von 1 bis 100, vorzugsweise 10 bis 50 Gew.-%, insbesondere 3 bis 20 Gew.-%, bezogen auf Gesamtmonomer.

Die Glasübergangstemperaturen der vernetzten Poly(meth)acrylnitrile und der vernetzten Poly(meth)acrylate (vor der Aminolyse) liegen im allgemeinen im Bereich von 60 bis 200, vorzugsweise 100 bis 170°C.

Als Polyamine für die Aminolyse kommen beispielsweise Triethylentetramin, Tetraethylenpentamin, Pentaethylenhexamin sowie ihre N-Methyl- und N-Ethylderivate in Frage, wobei der Methylierungs- bzw. Ethylierungsgrad an den N-Atomen maximal so weit reicht, daß eine primäre Aminogruppe bestehen bleibt. Die Polyamine können in technischer Qualität eingesetzt werden, sofern sie die Merkmale a) bis c) erfüllen; andernfalls müssen sie vorgereinigt werden. Im einzelnen beträgt der Grenzwert x für den Anteil heterocyclischer Isomerer bevorzugt

| | |
|---|---|
| für Triethylentetramin: | 25 %, |
| für Tetraethylenpentamin: | 35 %, |
| für Pentaethylenhexamin: | 50 %. |

Die Polyamine werden im Überschuß, bezogen auf die zu aminolysierenden Gruppen, eingesetzt; vorzugsweise in Mengen von 1,1 bis 8, insbesondere 2 bis 6 Mol Polyamin pro Mol Nitril- bzw. Estergruppen. Die Aminolyse kann bei Temperaturen von 120 bis 250°C, vorzugsweise 130 bis 200°C durchgeführt werden. Die Reaktionsdauer wählt man im allgemeinen so, daß die Nitril- bzw. Estergruppen quantitativ umgesetzt werden; die erzielbare Ausbeute an Amidgruppen beträgt mindestens 80, vorzugsweise mindestens 90 %, insbesondere mindestens 95 % (der Rest wird zu Carboxylgruppen umgesetzt). Bei der Aminolyse vernetzter Poly(meth)acrylnitrile wird das Perlpolymerisat bevorzugt in aliphatischen Kohlenwasserstoffen, beispielsweise in Isododekan, suspendiert und anschließend mit dem entsprechenden Polyamin und Wasser - in einer Menge von bis zu 25 Gew.-%, bezogen auf die Menge an Polyamin - versetzt.

Die erfindungsgemäß hergestellten Anionenaustauscher sind in besonderer Weise dazu geeignet, aus Chloridionen-haltigen wäßrigen Lösungen Sulfationen selektiv aufzunehmen.

Weiterer Gegenstand der Erfindung sind daher schwach basische Anionenaustauscher vom Poly(meth)acrylamid-Typ mit Polyaminogruppen mit einem Sulfationen-Aufnahmevermögen von 48 bis 180, vorzugsweise mindestens 53, insbesondere mindestens 60 g Sulfat pro kg Anionenaustauscher (trocken, bezogen auf die OH-Form und gemessen an einer wäßrigen Lösung von 100 g Kochsalz und 4,5 g Natriumsulfat (wasserfrei) pro Liter Lösung bei einem p$_H$-Wert von 3; Durchflußgeschwindigkeit; 5 Bettvolumina pro Stunde bei 25°C). Die Obergrenze des Sulfationen-Aufnahmevermögens ist vom Typ des Polyamins und vom Typ des Basispolymerisats abhängig; sie kann beispielsweise bis zu 180 g Sulfat pro kg Anionenaustauscher betragen.

Es erscheint besonders überraschend, daß der mit der Erfindung verbundene Effekt so hoch ausfällt, weil anzunehmen ist, daß durch die erfindungsgemäße Verfahrensmaßnahme die Anzahl der zum Anionenaustausch befähigten Gruppen nicht geändert wird.

Weiterer Gegenstand der Erfindung ist schließlich die Verwendung dieser Anionenaustauscher zum Entfernen von Sulfationen aus wäßrigen Chloridionen enthaltenden Flüssigkeiten, insbesondere aus Kochsalzsolen und aus Abwässern.

Die Prozentangaben in den nachfolgenden Beispielen sind Gewichtsprozente; Teile sind Gewichtsteile.

Beispiele

Vergleich I

129 ml durch zweimaliges Beladen mit Salzsäure gereinigter Anionenaustauscher Amberlite IRA 60 (Gehalt an schwach basischen Gruppen: 361 mmol pro 129 ml) bzw. 180 ml Duolite A 374 (Gehalt an schwach basischen Gruppen: 360 mmol pro 180 ml) in der freien Baseform wurden im Becherglas in 100 ml wäßriger Kochsalzlösung (1000 g NaCl/Liter Lösung) suspendiert und durch Zutropfen von 3N Salzsäure in die Salzform übergeführt, bis die Suspension einen pH-Wert von 3 hatte.

Nach Überführen der Suspension in ein Filterrohr wurde eine wäßrige Kochsalzlösung (100 g NaCl/Liter Lösung, mit Salzsäure auf einen pH-Wert von 3 eingestellt) mit einer Geschwindigkeit von 5 Bettvolumina pro Stunde so lange über den Austauscher filtriert, bis die pH-Werte von Zu- und Ablauf übereinstimmten.

Danach wurde eine wäßrige Natriumsulfat-haltige Kochsalzlösung (100 g NaCl + 4,5 g $Na_2SO_4$ - (wasserfrei) pro Liter Lösung, pH = 3) mit einer Geschwindigkeit von 5 Bettvolumina pro Stunde bei 25°C über den Austauscher filtriert, bis die Sulfatkonzentration von Zu- und Ablauf übereinstimmten. Dabei wurde der Ablauf in Fraktionen von 100 ml portioniert; darin wurden Schwefelgehalt und pH-Wert bestimmt. Die Sulfatadsorption wurde unter Berücksichtigung des nachträglich gemessenen Zwischenvolumens (Zwickelvolumens) aus der Gesamtmenge des Zulaufs, des Ablaufs und der zugehörigen Schwefelgehalte berechnet.

Danach nehmen Duolite A 374 17,1 g Sulfat und IRA 60 22,75 g Sulfat pro kg Austauscher (trocken, in der freien Basenform) auf.

Beispiel 1

A. Synthese des Perlpolymeriats

In einem 3 l-Reaktionsgefäß werden 1081 g Acrylsäuremethylester, 146 g Isododecan (Porenbildner), 96,7 g Divinylbenzol (62,8 %ig, Rest Ethylstyrol; Vernetzer), 36,4 g Octadien-1,7 (Vernetzer) und 8,1 g Dibenzoylperoxid (75 %ig) vorgelegt. Nach 15 Minuten Rühren gibt man die wäßrige Phase enthaltend 1500 ml vollentsalztes Wasser und 2,25 g Methylcellulose zu. Die Mischung wird auf 64°C erhitzt und bei dieser Temperatur 5 Stunden gerührt, dann auf 90°C aufgeheizt und bei dieser Temperatur weitere 2 Stunden gerührt. Nach dem Abkühlen wird das Perlpolymerisat abfiltriert, mit Wasser gewaschen und getrocknet.

B. Aminolyse des Perlpolymerisats

1. In einem 4 l-Vierhalskolben werden 250 g trockenes Perlpolymerisat aus Stufe A vorgelegt. Dazu gibt man 2028 g Triethylentetramin folgender Zusammensetzung:

Isomer 1                                                    81 %

$H_2N-CH_2-CH_2-NH-CH_2-CH_2-NH-CH_2-CH_2-NH_2$

Isomer 2                                                     3 %

$H_2N-CH_2-CH_2-N\underset{\diagdown\_\_\_\diagup}{\overset{\diagup\frown\diagdown}{\phantom{xxx}}}N-CH_2-CH_2-NH_2$

Isomer 3                                                    16 %

$H_2N-CH_2-CH_2-NH-CH_2-CH_2-N\underset{\diagdown\_\_\_\diagup}{\overset{\diagup\frown\diagdown}{\phantom{xxx}}}NH$

Im Laufe von 2,25 Stunden wird die Mischung auf 180°C erhitzt und bei dieser Temperatur 20 Stunden gerührt. Nach dem Abkühlen wird die flüssige Phase abgesaugt und das Harz in Wasser eingetragen.
Ausbeute: 1260 ml
Gehalt an primären und sekundären Aminogruppen: 3,96 mol/l
Gehalt an Carboxylgruppen: 0,13 mol/l
2. Vergleich
Das Verfahren B1 wird mit 2028 g Triethylentetramin folgender Zusammensetzung wiederholt:

Isomer 1                                                    58 %

$H_2N-CH_2-CH_2-NH-CH_2-CH_2-NH-CH_2-CH_2-NH_2$

Isomer 2                                                    14 %

$NH_2-CH_2-CH_2-N\underset{\diagdown\_\_\_\diagup}{\overset{\diagup\frown\diagdown}{\phantom{xxx}}}N-CH_2-CH_2-NH_2$

Isomer 3                                                    14 %

$HN\underset{\diagdown\_\_\_\diagup}{\overset{\diagup\frown\diagdown}{\phantom{xxx}}}N-CH_2-CH_2-NH-CH_2-CH_2-NH_2$

Isomer 4                                                     7 %

verschiedene andere N-alkylierte Piperazine

Isomer 5                                                     7 %

$N(-CH_2-CH_2-NH_2)_3$

Ausbeute: 1297 ml

5

Gehalt an primären und sekundären Aminogruppen: 3,52 mol/l
Gehalt an Carboxylgruppen 0,188 mol/l
3. Vergleich
Das Verfahren B1 wird mit 2963 g N-Aminoethylpiperazin wiederholt.
Ausbeute: 2400 ml;
Gehalt an primären und sekundären Aminogruppen: 3,23 mol/l
Gehalt an Carboxylgruppen: 0,21 mol/l.

C. Bestimmung des Sulfat-Aufnahmevermögens

Die nach B hergestellten Ionenaustauscher wurden wie in Vergleich I beschrieben behandelt, und anschließend wurde mit der wäßrigen Sulfationen-haltigen Kochsalzlösung (Zusammensetzung wie in Vergleich I) das Aufnahmevermögen für Sulfat bestimmt. Die Ergebnisse sind wie folgt:

|  |  | Harz B1 | Harz B2 | Harz B3 |
|---|---|---|---|---|
| Einsatz an gereinigtem Anionenaustauscher in der freien Baseform | [ml] | 94 | 110 | 108 |
|  | [mmol] | 363 | 363 | 358 |
| Aufnahme Sulfat pro Liter Ionenaustauscher (OH-Form): | | 26,65 g | 20,05 g | 10,5 g |
| pro kg Ionenaustauscher (OH-Form): | | 63,45 g | 47,74 g | 25 g |

**Patentansprüche**

1. Verfahren zur Herstellung schwach basischer Anionenaustauscher vom Poly(meth)acrylamid-Typ mit Polyaminogruppen durch Aminolyse von Poly(meth)acrylnitril und/oder Poly(meth)acrylat mit Polyamin, wobei das Polyamin
   pro Molekül 4 bis 8 N-Atome besitzt,
   pro Molekül mindestens 1 primäre Aminogruppe trägt und
dadurch gekennzeichnet, daß das Polyamin
   einen Anteil heterocyclischer Isomerer unter einem Wert von

$$x = 100 - (A.B^{n-4}) \ [\%]$$

   enthält, wobei
   A     70 bis 99,
   B     0,7 bis 0,9 und
   n     die Zahl der N-Atome pro Molekül
bedeuten.

2. Verfahren nach Anspruch 1, wobei A 75 bis 97 beträgt.

3. Verfahren nach Anspruch 1, wobei A 80 bis 95 beträgt.

4. Verfahren nach Anspruch 1, wobei das Polyamin pro Molekül 4 oder 5 N-Atome besitzt.

5. Verfahren nach Anspruch 1, wobei das Polyamin in einer Menge von 1,1 bis 8 Mol pro Mol Nitril bzw. Estergruppen eingesetzt wird.

6. Schwach basische Anionenaustauscher vom Poly(meth)acrylamid-Typ mit Polyaminogruppen mit einem Sulfationen-Aufnahmevermögen von 48 bis 180 g Sulfat pro kg Anionenaustauscher (trocken, bezogen auf die OH-Form und gemessen an einer wäßrigen Lösung von 100 g Kochsalz und 4,5 g Natriumsulfat pro Liter Lösung bei einem $p_H$-Wert von 3; Durchflußgeschwindigkeit: 5 Bettvolumia pro Stunde bei 25°C).

7. Anionenaustauscher nach Anspruch 6 mit einem Sulfationen-Aufnahmevermögen von mindestens 53 g pro kg Anionenaustauscher (bezogen auf OH-Form, trocken).

8. Anionenaustauscher, erhältlich gemäß Verfahren nach Ansprüchen 1 bis 5.

9. Verwendung der Anionenaustauscher nach Ansprüchen 6 bis 8 zur Entfernung von Sulfationen aus wäßrigen Flüssigkeiten.

10. Verwendung nach Anspruch 9 zur Entfernung von Sulfationen aus Kochsalzsolen oder aus Abwässern.

**Claims**

1. Process for the preparation of weakly basic anion exchangers of the poly(meth)acrylamide type having polyamino groups by aminolysis of poly(meth)acrylonitrile and/or poly(meth)acrylate with a polyamine, wherein the polyamine

   contains 4 to 8 N atoms per molecule and

   carries at least 1 primary amino group per molecule,

   characterized in that the polyamine

   contains an amount of heterocyclic isomer below a value of

   $$x = 100 - (A \times B^{n-4}) \, [\%]$$

   wherein
   - A     denotes 70 to 99,
   - B     denotes 0.7 to 0.9 and
   - n     denotes the number of N atoms per molecule.

2. Process according to Claim 1, wherein A is 75 to 97.

3. Process according to Claim 1, wherein A is 80 to 95.

4. Process according to Claim 1, wherein the polyamine contains 4 or 5 N atoms per molecule.

5. Process according to Claim 1, wherein the polyamine is employed in an amount of 1.1 to 8 mole per mole of nitrile or ester groups.

6. Weakly basic anion exchanger of the poly(meth)acrylamide type having polyamino groups having a sulphate ion absorption capacity of 48 to 180 g of sulphate per kg of anion exchanger (dry, based on the OH form and measured on an aqueous solution of 100 g of sodium chloride and 4.5 g of sodium sulphate per litre of solution at a pH of 3; flow rate: 5 bed volumes per hour at 25°C).

7. Anion exchanger according to Claim 6 having a sulphate ion absorption capacity of at least 53 g per kg of anion exchanger (based on the OH form, dry).

8. Anion exchanger obtainable by the process according to Claims 1 to 5.

9. Use of the anion exchanger according to Claims 6 to 8 for removing sulphate ions from aqueous liquids.

10. Use according to Claim 9 for removing sulphate ions from sodium chloride brines or from waste waters.

**Revendications**

1. Procédé de préparation d'échangeurs d'anions faiblement basiques du type poly(méth)acrylamide contenant des groupes polyamino par aminolyse d'un poly(méth)acrylonitrile et/ou d'un poly(méth)-acrylate par une polyamine, dans lequel la polyamine contient 4 à 8 atomes d'azote par molécule, porte au moins un groupe amino primaire par molécule, caractérisé en ce que la polyamine contient une fraction d'isomères hétérocycliques inférieure à une valeur de :

   $$x = 100 - (A.B^{n-4}) \, [\%]$$

dans laquelle
A est un nombre allant de 70 à 99,
B est un nombre allant de 0,7 à 0,9 et
n est le nombre des atomes d'azote par molécule.

2. Procédé selon la revendication 1, dans lequel A a une valeur de 75 à 97.

3. Procédé selon la revendication 1, dans lequel A a une valeur de 80 à 95.

4. Procédé selon la revendication 1, dans lequel la polyamine contient 4 ou 5 atomes d'azote par molécule.

5. Procédé selon la revendication 1, dans lequel la polyamine est mise en oeuvre en quantité de 1,1 à 8 mol/mol de groupes nitrile ou ester.

6. Echangeurs d'anions faiblement basiques du type poly(méth)acrylamide portant des groupes polyamino ayant une capacité d'absorption des ions sulfates de 48 à 180 g de sulfate par kilogramme d'échangeur d'ions (sec) sous la forme OH, la mesure étant faite sur une solution aqueuse de 100 g de chlorure de sodium et 4,5 g de sulfate de sodium par litre de solution à pH 3 à un débit de 5 volumes de lit à l'heure et à 25 °C.

7. Echangeur d'anions selon la revendication 6, ayant une capacité d'absorption des ions sulfates d'au moins 53 g par kilogramme d'échangeur d'anions (sec, sous la forme OH).

8. Echangeur d'anions obtenu par un procédé selon les revendications 1 à 5.

9. Utilisation des échangeurs d'anions selon les revendications 6 à 8 pour l'élimination des ions sulfates contenus dans des liquides aqueux.

10. Utilisation selon la revendication 9, pour l'élimination des ions sulfates contenus dans des saumures ou dans des eaux résiduaires.